# EUROPEAN PATENT SPECIFICATION

(11) **EP 0 607 771 B1**
(45) Date of publication and mention of the grant of the patent: **17.10.2001**
(21) Application number: 93870239.6
(22) Date of filing: 21.12.1993
(51) Int. Cl.: C08F 10/00, C08F 4/606

(54) **Process for polydispersity control of polypropylene**
Verfahren zur Kontrolle der Polydispersität von Polypropylen
Procédé pour le contrôle de la polydispersité de polypropylene

(30) Priority: 23.12.1992 US 996217
(43) Date of publication of application: 27.07.1994
(73) Proprietor: FINA TECHNOLOGY, INC., Houston, Texas 77267-4412 (US)
(72) Inventor: Shamshoum, Edwar, Houston, Texas 77062 (US); Rauscher, David, Webster, Texas 77598 (US); Burmaster, Douglas, Houston, Texas 77081 (US)
(74) Representative: Leyder, Francis

(56) References cited:
- EP-A- 0 439 622
- EP-A- 0 452 916
- EP-A- 0 576 412

## Description

### SPECIFICATION

Catalyst systems for the polymerization of olefins are well known in the art. Typically, these systems include a Ziegler-Natta type polymerization catalyst component; a co-catalyst, usually an organoaluminum compounds; and an electron donor compound. Examples of such catalyst systems are shown in the following U.S. Patents: 4,107,413; 4,294,721; 4,439,540; 4,115,319; 4,220,554; 4,460,701; and 4,562,173; the disclosures of these patents are hereby incorporated by reference. These are just a few of the scores of issued patents relating to catalysts and catalyst systems designed primarily for the polymerization of propylene and ethylene.

A Ziegler-Natta type polymerization catalyst is basically a complex derived from a halide of a transition metal, for example, titanium, chromium or vanadium with a metal hydride and/or a metal alkyl that is typically an organoaluminum compound. The catalyst is usually comprised of a titanium halide supported on a magnesium compound complexed with an alkylaluminum.

An electron donor compound is used in the polymerization reaction to reduce the atactic form of the polymer thereby giving control of and increasing the production of isotactic polymers. Although a broad range of compounds are known generally as electron donors, a particular catalyst may have a specific compound or group of compounds with which it is especially compatible. Work disclosed in Makromol. Chem., Härkönen et al, vol. 192, p. 2857 (1991) and in "Catalytic Olefin Polymerization" (Keii, T., Soga, K., Eds., Elsevier:New York, 1990) Härkönen et al, p. 87, has shown that some effects of the donor can be influenced by its structure and suggests that a high performance alkoxysilane donor will contain at least two small alkoxy groups, preferably methoxy, and one or two branched alkyl groups. Other work suggested that a good donor preferably has a dimethoxy structure with a bulky alkyl or cycloalkyl group containing at least one secondary or tertiary carbon, but that the second alkyl group should contain a primary carbon. One such group of electron donors is disclosed in U.S. Patent No. 4.927.797.

EP-A-576412 discloses a catalyst system for the polymerization of olefins that comprises a titanium catalyst in combination with an electron donor.

EP-A-452916 discloses a catalyst system and process for producing polyolefins using a catalyst comprising a magnesium compound, halogenated titanium and an electron donor compound; an organoaluminum compound; and tetraalkoxysilane.

EP-A-439622 discloses a magnesium supported catalyst component for the polymerization of α-olefins comprising a solid component containing magnesium, titanium, halogen and an electron donating compound.

Broader molecular weight distribution polyolefins are preferable in ceratin processes and applications. It would be desirable to control molecular weight distribution or polydispersity directly through the variation of a process variable or modification of the catalyst system. Molecular weight distribution (MWD) can be represented as the ratio of the weight average molecular weight (M_{w}) to the number average molecular weight (Mₙ): MWD = M_{w}/Mₙ. This ratio is also known as polydispersity.

### SUMMARY OF THE INVENTION

The present invention provides a process for controlling the polydispersity in the polymerization of propylene using the combination of a particular type of catalyst component with a specific electron donor compound which results in significant increases in improved control of the properties of the polymer product, specifically polydispersity. The catalyst is preferably a new generation Ziegler-Natta catalyst comprising a complex of a dialkoxy magnesium support and a titanium halide.

The specific electron donor of the present invention is di-t-butyldimethoxysilane (DTDS). In addition, the system contains an organoaluminum compound which acts as a co-catalyst. A preferred co-catalyst is a trialkylaluminum, most preferably triethylaluminum (TEAl).

The process for the polymerization of propylene comprises: contacting the new generation polymerization catalyst with an organoaluminum compound, preferably with a trialkylaluminum; contacting the catalyst with an electron donor either simultaneously with or after contact with the organoaluminum, the electron donor being a silane compound as described above, pre-polymerizing the catalyst by contacting a small amount of monomer with the catalyst; and introducing the catalyst into a polymerization reaction zone containing the organoaluminum compound, the electron donor, hydrogen and propylene. The process further comprises withdrawing a polymer product in which the polydispersity is in range of from about 10 to about 12.

### BRIEF DESCRIPTION OF THE DRAWINGS

A more complete appreciation of the invention and many of the attendant advantages thereof will be readily understood by reference to the following detailed description when considered in connection with the accompanying drawing wherein:

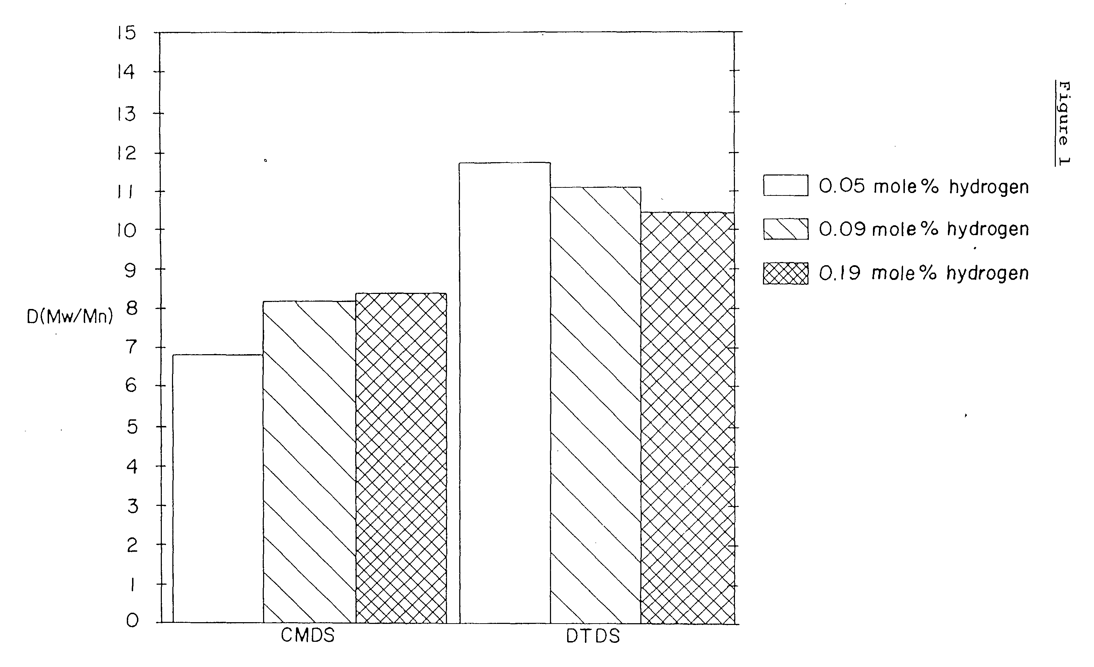

Figure 1 is a graph comparing the effect of CMDS and DTDS on polydispersity at various mole percent of hydrogen addition.

### DETAILED DESCRIPTION OF THE INVENTION

This invention comprises the discovery of an appropriate type of electron donor which gives a significant increase in polydispersity of the desired polymer product. It has been surprisingly discovered that DTDS serving as an electron donor in combination with a particular type of catalyst results in significant increases in polydispersity over the previously known efficiencies for this particular type of catalyst as well as other known catalyst systems. The invention provides a catalyst system capable of polymerizing propylene monomer with a catalyst efficiency of about 25 kilograms of polymer product per gram of catalyst in one hour.
Further, the catalyst system may be characterized by an efficiency of over 25 kg/g- cat·h while the Si/Ti ratio defined by the mole ratio of the silane electron donor and the titanium component of the catalyst varies within the range 4-200. Additionally, the catalyst system may be further characterized by an efficiency greater than 25 while producing a polymer product with xylene solubles of about 3.00 wt% or less. The catalyst system may be further characterized by having an isotactic capacity such that the system produces polypropylene in which the xylene soluble atactic form may be kept at about 3.00 wt% of the product while the Si/Ti mole ratio varies up to 200. The system may be further characterized by higher molecular weight of the product. These properties of this invention are covered in EP-A-0,576,412.

The present invention relates to a process for polymerization of propylene using a combination of DTDS as an electron donor with a particular type of catalyst. This combination results in a catalyst system that can be used in the polymerization of propylene, to provide better control of the polydispersity of the polymer product than with other electron donors and the particular type of catalyst. These and other beneficial advantages will become more apparent from the following detailed description of the invention and the accompanying examples.

It has been discovered that DTDS as electron donor does significantly enhance the catalytic properties of conventional Ziegler-Natta catalyst.
The catalyst comprises a compound preferably of the general formula MR⁺ₓ where M is the metal, R is a halogen or a hydrocarbyloxy and x is the valence of the metal. Preferably, M is a Group IVB, VB or VIB metal, more preferably a Group IVB, and most preferably titanium. Preferably, R is chlorine, bromine, an alkoxy or a phenoxy, more preferably chlorine or ethoxy and most preferably, chlorine. Illustrative examples of the transition metal compound catalyst components are TiCl₄, TiBr₄, TiI₄, Ti(OC₂H₅)₃Cl, Ti(OC₂H₅)Cl₃, Ti(OC₃H₇)₂Cl₂, Ti(OC₄H₉)₃Cl Ti(OC₆H₁₃)₂Cl₂, Ti(OC₈H₁₇)₂Br₂ and Ti(OC₁₂H₂₅)Cl₃, with TiCl₄ being preferred. Mixtures of the transition metal compounds may be used. No restriction on the number of transition metal compounds is made as long as at least one transition metal compound is present.

If supported, the support should be an inert solid which is chemically unreactive with any of the components of the conventional Ziegler-Natta catalyst. The support is preferably a magnesium compound. Examples of the magnesium compounds which are to be used to provide a support source for the catalyst component are magnesium halides, dialkoxymagnesiums, alkoxymagnesium halides, magnesium oxyhalides, dialkylmagnesiums, magnesium oxide, magnesium hydroxide, and carboxylates of magnesium.

One particular Ziegler-Natta catalyst which can be used in the present invention is a new generation, Ziegler-type titanium catalyst for the polymerization of olefins as disclosed in U.S. Patent Nos. 4,927,797; 4,816,433 and 4,839,321, the disclosures of which are hereby incorporated.

Electron donors are typically used in two ways in the formation of a Ziegler- Natta catalyst and a catalyst system. First, an internal electron donor may be used in the formation reaction of the catalyst as the transition metal halide is reacted with the metal hydride or metal alkyl. Examples of internal electron donors include: amines, amides, ethers, esters, aromatic esters, ketones, nitriles, phosphines, stibines, arsines, phosphoramides, thioethers, thioesters, aldehydes, alcoholates, and salts of organic acids. The second use for an electron donor in a catalyst system is as an external electron donor or selectivity control agent (SCA) for stereoregulation in the polymerization reaction. A description of the two types of electron donors is provided in U.S. Patent 4, 535, 068. The same compound may be used in both instances, although typically they are different. A common external electron donor is an organic silicon compound, for example, cyclohexylmethyl dimethoxysilane (CMDS), as disclosed in U.S. Patent Nos. 4,927,797 and 5,066,738, hereby incorporated by reference.

The internal electron-donor compounds suitable for preparing conventional Ziegler-Natta catalyst components include ethers, ketones, lactones, electron donors compounds with N, P and/or S atoms and specific classes of esters. Particularly suitable are the esters of phthalic acid, such as diisobutyl, dioctyl, diphenyl and benzylbutylphthalate; esters of malonic acid, such as diisobutyl and diethylmalonate; alkyl and arylpivalates; alkyl, cycloalkyl and arylmaleates; alkyl and aryl carbonates such as diisobutyl, ethyl-phenyl and diphenylcarbonate; succinic acid esters, such as mono and diethyl succinate. These esters of phthalic acid are the preferred donors.

Preferred aromatic hydrocarbons useful as internal electron donors include benzene, xylene, ethylbenzene, propylbenzene and trimethylbenzene. A diester of phthalic acids is preferably used as the diester of the aromatic dicarboxylic acid. Examples include dimethyl phthalate, diethyl phthalate, dipropyl phthalate, diisopropyl phthalate, dibutyl phthalate, diisobutyl phthalate, diamyl phthalate, diisoamyl phthalate, methylbutyl phthalate, ethylbutyl phthalate, ethylisobutyl phthalate and ethylpropyl phthalate.

As the present invention relates particularly to external electron donors, the term "electron donor" as used herein, refers to the external electron donor or selectivity control agent. The external electron donor acts as a stereoregulator to control the amount of atactic form of polymer produced. It may also increase the production of isotactic polymers. Organic silicon compounds are known in the art for use as electron donors. Examples of electron donors that are organic silicon compounds are disclosed in U.S. Patent Nos. 4,218,339; 4,395,360; 4,328,122; 4,473,660 and 4,927,797. As mentioned, a particular catalyst may produce better results when paired with a particular group of electron donors. Examples of this pairing of catalyst and electron donors are disclosed in U.S. Patent Nos. 4,562,173; 4,547,552; and 4,927,797.

The electron donor included in the present invention is di-t-butyldimethoxysilane (DTDS). The combination of this electron donor (DTDS) and a conventional heterogeneous Ziegler-Natta catalyst yields wholly unexpected results that surpass previously known catalyst systems. The electron donor as described hereabove may be limited by the stability of the compound and the ease of handling including storage, transportation and use in the plant.

A significant unexpected result obtained from the combination of the above-described catalyst and DTDS is the dramatic increase in the polydispersity. The present invention provides a process for the polymerization of propylene using the catalyst and the specific electron donor comprising :
(a) making a catalyst by the steps comprising :
   (1) selecting a conventional supported Ziegler-Natta catalyst component;
   (2) contacting the catalyst component with an organoaluminum compound; and
   (3) contacting said catalyst component with the electron donor either simultaneously with or after step (2), said electron donor being di-t-butyl dimethoxysilane,
(b) introducing said catalyst into a polymerization reaction zone containing propylene under polymerization conditions,
(c) introducing hydrogen ranging from 0.05 to 0.19 mole percent and
(d) withdrawing polypropylene having a polydispersity in a range of from 10 to 12 wherein polydispersity is decreased by increasing within said range the amount of hydrogen introduced or increased by correspondingly decreasing within said range the hydrogen amount.

Although the catalyst system may be used in almost any commercially known polymerization process, the preferred process of the present invention includes a pre-polymerization of the catalyst by contacting a small amount of propylene with the catalyst after the catalyst has been contacted witht the electron donor. A pre-polymerization process is described in U.S. Patent Nos. 4, 767, 735, and 5, 122, 583.
As provided in those disclosures, a carrier stream for the catalyst is provided, the catalyst is contacted with the co-catalyst or organoaluminum compound, the catalyst is contacted with the electron donor, the catalyst stream is contacted with a relatively small amount of the total amount of monomer to be polymerized, the catalyst stream passes through a tubular reactor, and the pre-polymerized catalyst and catalyst stream are introduced into the polymerization reaction zone. The electron donor may be contacted with the catalyst simultaneously with the co-catalyst. A polymer product may then be withdrawn from the reactor.
In using the described catalyst with the electron donors described by the formula above, the polymer product may be characterized by a polydispersity of from 10 to 12.

The following Examples and Comparative Examples illustrate the present invention and its various advantages in more detail. The results are summarized in Tables 1-2. The catalyst used was prepared with the materials and processes as disclosed in U.S. Patent Nos. 4,927,797; 4,816,433 and 4,839,321.

### Example 1

Prior to a polymerization run, all traces of moisture and air were expelled from a 2 L reactor by heating to a temperature over 100°C for a minimum of 30 minutes under a constant purge of dry nitrogen. Following this heating, the reactor was cooled to room temperature (25°C) under nitrogen. The reactor was stabilized at room temperature and then 8 mmoles of hydrogen and 1.0 L of propylene were added. The reactor was then stirred at 1000 rpm. 1.0 mmole of TEAl and 0.05 mmoles of DTDS were added to a 40 cc tubular reaction vessel. Ten milligrams of a commercially available Ziegler-Natta catalyst for the polymerization of olefins in mineral oil suspension were added to the 40 cc reaction vessel. The TEAl and DTDS submixture was allowed to precontact approximately five minutes, and the final mixture with catalyst was allowed to contact for approximately two minutes prior to use. The 40 cc reaction vessel was then attached to an entry point on the 2 L reactor and the catalyst mixture was flushed into the 2 L reactor with room temperature liquid propylene. The reactor temperature was then raised to 70°C. The total amount of propylene present in the reactor was about 1.2 L. The polymerization reaction was allowed to proceed for one hour, at which point it was terminated by venting the excess propylene and cooling the reactor to room temperature. The reactor was then opened to collect the polymer product which was dried and analyzed. The efficiency of the catalyst was determined from the mass yield of polymer for the known amount of catalyst used. The efficiency was reported in kilograms of polymer product per gram of catalyst per hour. The Si/Ti mole ratio was calculated as the molar ratio of DTDS relative to the molar amount of catalyst. The xylene solubles were measured by dissolving the polymer in hot xylene, cooling the solution to 0°C and precipitating the insoluble polymer. The xylene solubles are the weight percentage of polymer that remained dissolved in the cold xylene. The molecular weight distribution of the polymer was characterized by gel permeation chromatography of filtered polymer samples dissolved in trichlorobenzene at 145°C. The molecular weight distribution or polydispersity (D) is given as the ratio of weight-average to number-average molecular weight (Mw/Mn). The polymerization results are tabulated in Table 1.

### Example 2

The procedure of Example 1 was repeated, with the exception that the amount of hydrogen added to the reactor was 16 mmoles. The polymerization results are tabulated in Table 1.

### Example 3

The procedure of Example 1 was repeated with the exception that the amount of hydrogen added to the reactor was 32 mmoles. The polymerization results are tabulated in Table 1.

### Comparative Examples 1-3

The procedure of Example 1-3 were repeated, with the exception that CMDS was substituted for DTDS as the electron donor. The polymerization results are tabulated in Table 2.

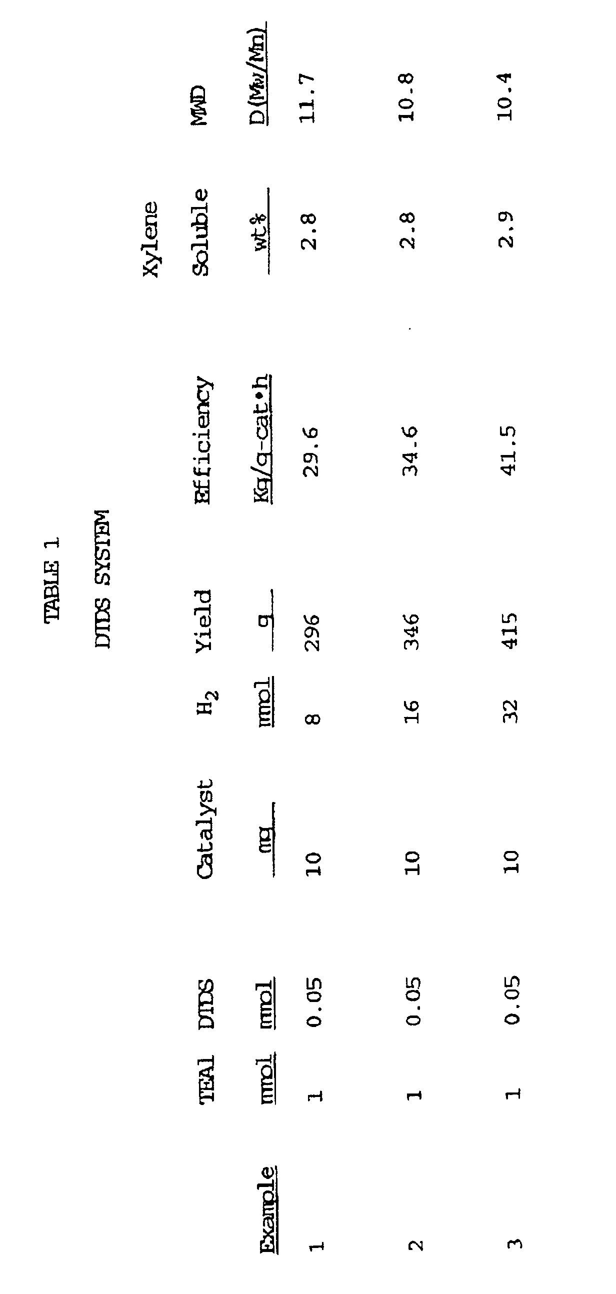

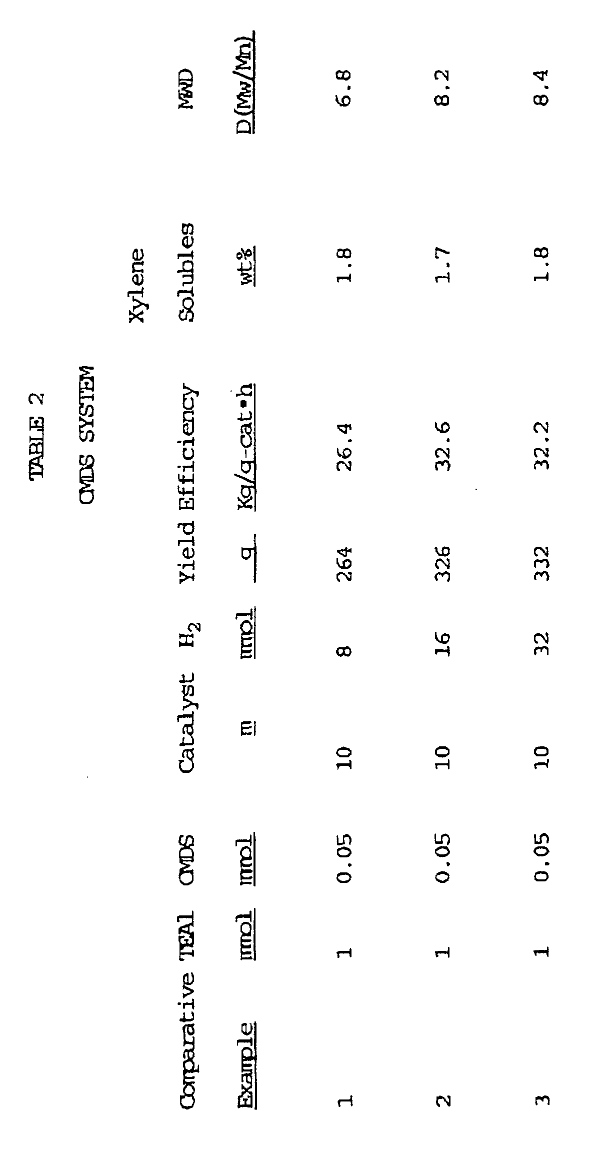

The use of DTDS significantly increases the polydispersity of polypropylene. The data above shows that use of DTDS as an electron donor increases polydispersity from about 8.0 to 11.0 (approximately 38%) when compared with CMDS. This increase is accomplished with only a modest increase in xylene solubles. Figure 1 illustrates the improvement in polydispersity by using DTDS. At each level of hydrogen addition the polydispersity of the polymer from the catalyst system using DTDS was greater than a catalyst system using the same amount of CMDS at the same polymerization conditions.

Obviously, numerous modifications and variations of the present invention are possible in light of the above teachings. It is therefore to be understood that within the scope of the appended claims, the invention may be practiced otherwise than as specifically described herein.

## Claims

1. A method for controlling the polydispersity in a process for the polymerization of propylene, comprising :
(a) making a catalyst by the steps comprising :
(1) selecting a conventional supported Ziegler-Natta catalyst component;
(2) contacting the catalyst component with an organoaluminum compound; and
(3) contacting said catalyst component with an electron donor either simultaneously with or after step (2), said electron donor being di-t-butyl dimethoxysilane,
(b) introducing said catalyst into a polymerization reaction zone containing propylene under polymerization conditions,
(c) introducing hydrogen ranging from 0.05 to 0.19 mole percent and
(d) withdrawing polypropylene having a polydispersity in a range of from about 10 to about 12 wherein polydispersity is decreased by increasing within said range the amount of hydrogen introduced or increased by correspondingly decreasing within said range the hydrogen amount.

2. The method of Claim 1 wherein said organoaluminum compound is triethylaluminum.

3. The method of claim 1 or claim 2 further comprising :
pre-polymerizing said catalyst by contacting a small amount of monomer with said catalyst after step (c).

4. The method of any one of the preceding Claims further comprising :
adding a second monomer so as to form a copolymer.

## Patentansprüche

1. Verfahren zum Kontrollieren der Polydispersität in einem Verfahren für die Polymerisation von Propylen, umfassend
(a) Herstellen eines Katalysators durch die Stufen, umfassend:
(1) Auswählen einer herkömmlichen unterstützten Ziegler-Natta Katalysatorkomponente,
(2) in Kontakt bringen der Katalysatorkomponente mit einer Organoaluminiumverbindung und
(3) in Kontakt bringen der Katalysatorkomponente mit einem Elektronendonor entweder gleichzeitig mit oder nach Stufe (2), wobei der Elektronendonor Di-t-butyldimethoxysilan ist,
(b) Einführen des Katalysators in eine Polymerisationsreaktionszone, enthaltend Propylen unter Polymerisationsbedingungen,
(c) Einführen von Wasserstoff, der im Bereich von 0,05 bis 0,19 Molprozent liegt, und
(d) Abziehen von Polypropylen mit einer Polydispersität in einem Bereich von etwa 10 bis etwa 12, wodurch Polydispersität verringert wird durch Erhöhen der Menge von eingeführtem Wasserstoff in dem Bereich oder erhöht wird durch entsprechendes Verringern der Wasserstoffmenge in dem Bereich.

2. Verfahren nach Anspruch 1, wobei die Organoaluminiumverbindung Triethylaluminium ist.

3. Verfahren nach Anspruch 1 oder Anspruch 2, ferner umfassend:
Vorpolymerisieren des Katalysators durch in Kontakt bringen einer geringen Menge von Monomer mit dem Katalysator nach Stufe (c) .

4. Verfahren nach einem der vorhergehenden Ansprüche, ferner umfassend:
Hinzufügen eines zweiten Monomeren, wodurch ein Copolymer gebildet wird.

## Revendications

1. Un procédé pour contrôler la polydispersité dans un procédé de polymérisation du propylène, comprenant :
(a) réaliser un catalyseur selon les étapes comprenant :
(1) choisir un composant de catalyseur de Ziegler-Natta sur support habituel ;
(2) mettre en contact le composant de catalyseur avec un composé d'organoaluminium ; et
(3) mettre en contact ce composant de catalyseur avec un donneur d'électrons soit simultanément lors de soit après l'étape (2), ce donneur d'électrons étant le di-t-butyl diméthoxysilane,
(b) introduire ce catalyseur dans une zone de réaction de polymérisation contenant du propylène sous des conditions de polymérisation,
(c) introduire de l'hydrogène en une quantité entre 0,05 à 0,19 mole pour cent et
(d) retirer le polypropylène ayant une polydispersité dans un intervalle d'environ 10 à environ 12 où la polydispersité est diminuée en augmentant dans cet intervalle la quantité d'hydrogène introduit ou augmentée en diminuant de façon correspondante dans cet intervalle la quantité d'hydrogène.

2. Procédé selon la revendication 1 où ce composé d'organoaluminium est le triéthylaluminium.

3. Procédé selon la revendication 1 ou la revendication 2 comprenant en outre :
Pré-polymériser ce catalyseur en mettant en contact une petite quantité de monomère avec ce catalyseur après l'étape (c).

4. Procédé selon l'une quelconque des revendications précédentes comprenant en outre :
Ajouter un second monomère de façon à former un copolymère.
